Europäisches Patentamt

European Patent Office

Office européen des brevets

(19)

(11) Numéro de publication : **0 099 306
B1**

(12) **FASCICULE DE BREVET EUROPÉEN**

(45) Date de publication du fascicule du brevet :
30.09.87

(51) Int. Cl.⁴ : **B 29 C 51/26**

(21) Numéro de dépôt : 83420070.1

(22) Date de dépôt : 26.04.83

(54) Procédé de fabrication d'articles en matière synthétique obtenus par thermoformage et liés les uns aux autres par des pattes d'accrochage pouvant être facilement rompues et dispositif pour sa mise en oeuvre.

(30) Priorité : 01.06.82 FR 8209830

(43) Date de publication de la demande :
25.01.84 Bulletin 84/04

(45) Mention de la délivrance du brevet :
30.09.87 Bulletin 87/40

(84) Etats contractants désignés :
BE CH DE GB IT LI LU NL

(56) Documents cités :
DE-A- 2 321 873
DE-U- 7 426 510
FR-A- 1 517 210
FR-A- 2 364 755
US-A- 3 475 526

(73) Titulaire : SEPROSY SOCIETE EUROPEENNE POUR LA TRANSFORMATION DES PRODUITS DE SYNTHESE
17bis, Boulevard Haussmann
Paris 9ème, Seine (FR)

(72) Inventeur : Jacquart, Alain Route de Baufort
Ferrière la Petite Les Marlières Hauts-Prés
F-59680 Ferriere La Grande (FR)

(74) Mandataire : Maureau, Philippe
Cabinet Germain & Maureau Le Britannia - Tour C 20, bld Eugène Déruelle Boîte Postale 3011
F-69392 Lyon Cédex 03 (FR)

EP 0 099 306 B1

Jouve, 18, rue St-Denis, 75001 Paris, France

**Description**

La présente invention a pour objet un procédé de fabrication d'articles en matière synthétique obtenus par thermoformage et liés les uns aux autres par des pattes d'attache pouvant être facilement rompues selon le préambule de la revendication 1.

Pour des raisons de facilité de fabrication, il est fréquent de réaliser au cours d'une même opération de thermoformage, plusieurs articles, tels que des récipients uni- ou multi-cellulaires, reliés les uns aux autres par des pattes d'attache, et de séparer ceux-ci par rupture des pattes, avant ou après remplissage des récipients par les produits qu'ils sont destinés à contenir.

Selon une première possibilité, il est connu de former les articles et de réaliser la découpe entre ceux-ci à l'intérieur du moule, avec des chutes correspondant à une partie de la matière se situant entre les articles, pour ne laisser subsister que les pattes d'attache.

Cette technique nécessite des entraxes importants entre les articles, pour le passage des outils de découpe, et la chute, outre le fait qu'elle est source de perte de matière, occasionne de nombreux arrêts de fabrication tant il est complexe de la faire passer au travers de l'outillage. D'autre part, ce procédé nécessite un ajustement précis de toute la périphérie de l'outillage, bague, poinçon, pour un bon découpage, ainsi qu'une force de découpage importante, le poinçon devant non seulement découper la chute, mais également chasser d'une épaisseur la chute précédente. La force de découpe nécessaire est fonction de la longueur du périmètre de la chute, et de l'épaisseur et de la nature du matériau à découper.

Une autre technique consiste à réaliser une prédécoupe sans chute de matière par l'intermédiaire d'une découpe au filet très utilisée dans le domaine de la cartonnerie par exemple. Néanmoins, la réalisation d'une prédécoupe par cette technique nécessite une opération spécifique en reprise. Cette reprise est réalisée à la main sur un découpeur séparé, ou en ligne en ajoutant le découpeur à la sortie de la machine de formage.

Il est alors nécessaire de disposer d'un matériau supplémentaire avec le problème que pose un centrage qui doit être parfait, faute de quoi la découpe n'est pas réalisée à l'endroit souhaité. Ce procédé nécessite un matériel adapté à forte puissance de découpe et impose de changer souvent la tôle de découpe.

Dans une installation en ligne, un découpeur de ce type doit être conçu pour être raccordé avec une machine de thermoformage, et pour découper les pièces réalisées à grande cadence par cette dernière, et sortant en bande thermoformée de celle-ci. Ceci a pour effet de pratiquement doubler le niveau d'investissement en matériel.

Une autre technique consiste à réaliser en thermoformage des lignes de rupture prédéterminées avec ou sans perforations, pendant le formage sous vide ou sous pression d'air.

La séparation entre les récipients s'effectue par arrachement, avec l'inconvénient que les récipients séparés présentent des dentelures susceptibles de gêner leur maniement, et qui ne sont ni esthétiques, ni pratiques pour le consommateur. En outre, avec les prédécoupes obtenues par cette technique, il risque de se produire une déchirure d'un article lors de la séparation de deux articles.

Le brevet français FR-A-2 364 755, qui a servi de base pour le préambule de la revendication 1, concerne un procédé de fabrication par thermoformage d'un récipient tel qu'une boîte à œufs dans lequel différentes pièces réalisées simultanément sont séparées les unes des autres par des lignes de rupture constituées par une succession de découpes obtenues sans enlèvement de matière et de parties pleines. Dans une des parties du moule et à chaque endroit où une découpe doit être réalisée, est ménagée une cavité qui présente deux bords orientés dans la direction de déplacement de l'autre partie du moule, cette autre partie étant équipée d'une lame de coupe comportant une partie tranchante biaise pour la réalisation des découpes. Préalablement à la découpe, il est procédé à l'aide d'une lame à un amincissement de la feuille de matière destinée à former l'article.

Ce procédé nécessite, pour sa mise en œuvre, outre les deux parties du moule, deux lames dont les mouvements sont commandés indépendamment de ceux des deux parties du moule.

La présente invention vise à remédier à ces inconvénients, en fournissant un procédé du dernier type cité.

A cet effet, ce procédé de fabrication d'articles en matière synthétique obtenus par thermoformage et liés les uns aux autres par des pattes d'attache pouvant être facilement rompues et séparées les unes des autres par des découpes obtenues sans enlèvement de matière, à l'intérieur d'un moule comprenant une partie fixe et une partie mobile déplaçable par rapport à la partie fixe entre une position ouverte et une position fermée du moule, ce procédé consistant à ménager, dans la partie fixe et à chaque endroit où une découpe doit être réalisée, une fente délimitée par deux bords orientés dans la direction de déplacement de la partie mobile, tandis que la partie mobile est équipée pour la réalisation de chaque découpe d'une lame dont la partie tranchante est biaise, le formage de la feuille étant réalisé après amincissement de la matière et avant la découpe, dans les zones où des découpes doivent être réalisées, est caractérisé en ce qu'il consiste à réaliser la lame, de telle sorte que son bord tranchant soit situé à proximité de l'aplomb d'un bord de la fente correspondante de la partie fixe, la fente débouchant dans une rainure de largeur supérieure à celle de la fente, ce procédé consistant, en outre, à réaliser, préalablement à la découpe, et à l'aide de la lame de coupe, un amincissement de la feuille de matière destinée à former l'article, une contre-pression étant exercée, lors de cet amincissement, sur la face opposée à celle du côté de laquelle se trouve la lame de découpe.

La présente invention permet alors de remédier aux inconvénients de l'art antérieur.

Des développements avantageux du procédé selon l'invention font l'objet des revendications dépendantes 2 à 4.

L'avantage de ce procédé réside dans la réalisation d'une découpe sans chute, avec un dispositif intégré au moule, nécessitant une puissance faible compte tenu du fait que la découpe est réalisée dans des zones amincies, avec conservation de pattes d'attache relativement solides, puisque d'épaisseur voisine de celle de la feuille. A titre d'exemple, la puissance nécessaire pour réaliser la découpe est sensiblement la moitié de celle mise en œuvre dans les techniques connues décrites précédemment.

L'invention sera bien comprise à l'aide de la description qui suit en référence au dessin schématique annexé représentant, à titre d'exemple non limitatif, une forme d'exécution d'un article obtenu par ce procédé, ainsi qu'un dispositif pour la mise en œuvre de ce procédé :

Figure 1 est une vue en perspective de deux boîtes à œufs liées l'une à l'autre par des pattes d'attache ;

Figure 2 est une vue de dessus de ces boîtes à œufs ;

Figure 3 est une vue en coupe et à échelle agrandie d'une ligne de découpe entre ces boîtes à œufs ;

Figure 4 est une vue d'une portion de l'outillage mis en œuvre pour l'obtention de cette boîte à œufs ;

Figure 5 est une vue en coupe transversale et à échelle agrandie du système de prédécoupage entre les boîtes ;

Figure 6 est une vue partielle du dispositif de figure 5 lors de l'opération de découpe ;

Figure 7 est une vue de face d'une lame de coupe.

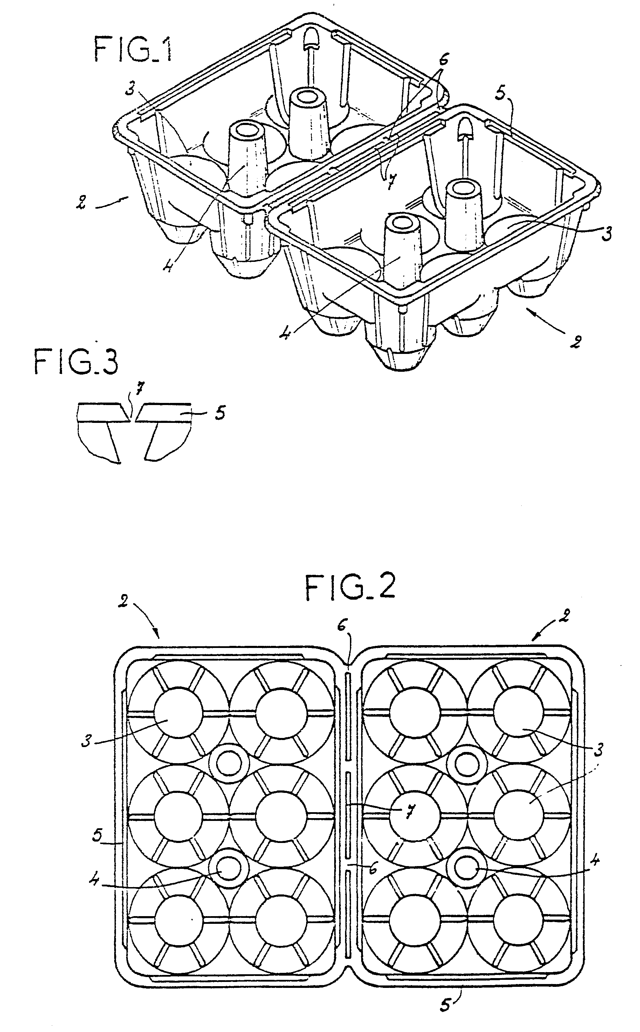

La figure 1 représente deux boîtes à œufs (2) dont chacune comporte six alvéoles en creux (3) séparées les unes des autres notamment par deux cheminées centrales (4) servant, en outre, à l'appui et à la fixation d'un couvercle non représenté au dessin qui prend également appui sur des rebords (5).

Les boîtes à œufs (2) sont obtenues par thermoformage, par deux exemplaires liés l'un à l'autre par des pattes (6) séparées les unes des autres par des découpes (7).

La séparation entre deux boîtes d'œufs, par rupture des pattes (6) peut être réalisée soit avant, soit après le conditionnement des œufs.

D'un point de vue pratique, le moule de thermoformage (8) comporte, dans la zone de liaison entre les deux boîtes d'œufs, une rainure (9), interrompue dans les zones correspondant aux pattes (6). Dans le fond de la rainure (9) débouche une fente (10), communiquant avec un collecteur (12) dans lequel débouchent les canaux (13) formant les évents des cavités (14) du moule.

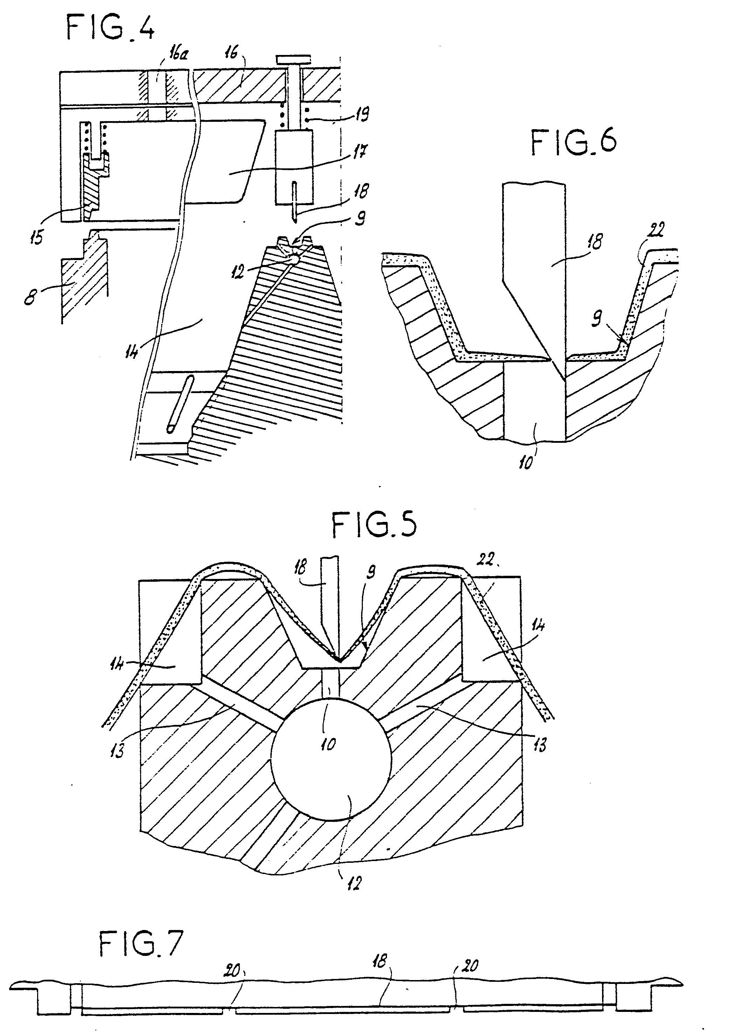

L'outillage comprend, de manière connue, un serre-flan (15), ainsi qu'une partie mobile (16) portant une préforme (17), et traversée par des canaux de soufflage (16a). La partie (16) porte également une lame (18) maintenue en position sous l'action d'un ressort (19), et susceptible de s'effacer par compression du ressort (19) lorsqu'elle rencontre une résistance trop élevée. Cette lame (18), qui est disposée en regard de la rainure (9), possède le profil représenté à la figure 7, c'est-à-dire présente des évidements (20) au niveau des zones où doivent être formées les pattes d'attache. Les parties tranchantes de la lame (18) sont biaises, de telle sorte que la découpe soit réalisée à proximité d'un bord de la fente (10).

Afin d'éviter le talonnage de la lame (18) sur les bords de la fente (10), ceux-ci sont légèrement chanfreinés.

D'un point de vue pratique, la feuille (22) de matière synthétique thermoformée étant placée dans le moule et se trouvant à un état maléable, il est procédé à la fermeture du moule, à la descente de la préforme (17), et de la lame (18). Au cours de cette opération, la lame (18) réalise un étirement et, par suite, un amincissement de la feuille (22) dans la rainure (9). La pression est alors établie à l'intérieur du moule, de manière à réaliser le thermoformage, avec établissement d'une contre-pression dans la fente (10) qui empêche la pénétration de la feuille (22) dans cette dernière. Il est enfin procédé à l'opération de découpe par poursuite de la descente de la lame (18), comme montré à la figure 6.

Comme il ressort de ce qui précède, l'invention apporte une grande amélioration à la technique existante en fournissant un procédé et un dispositif de réalisation de plusieurs articles thermoformés liés les uns aux autres par des pattes d'attache, les prédécoupes étant effectuées sans perte de matière, à l'intérieur même du moule de thermoformage, sans nécessiter la mise en œuvre d'une énergie importante.

Comme il va de soi, l'invention ne se limite pas à la seule application décrite ci-dessus à titre d'exemples. C'est ainsi notamment qu'il serait possible de ne pas établir de contre-pression dans la fente (10), qui serait alors de plus faible largeur, que la contre-pression dans la fente (10) pourrait être obtenue à l'aide d'une source de pression extérieure à l'appareil ou que la lame (18) pourrait être maintenue en position non pas par un ressort, mais par un système pneumatique, sans que l'on sorte pour autant du cadre de l'invention, tel que défini par les revendications.

**Revendications**

1. Procédé de fabrication d'articles en matière synthétique obtenus par thermoformage et liés les uns aux autres par des pattes d'attache (6) pouvant être facilement rompues et séparées les unes des autres par des découpes obtenues sans enlèvement de matière, à l'intérieur d'un moule comprenant une partie fixe (8) et une partie mobile (16) déplaçable par rapport à la partie fixe entre une position ouverte et une position fermée du moule, ce procédé consistant à ménager, dans la partie fixe et à chaque endroit où une découpe doit être réalisée, une fente (10) délimitée par deux bords orientés dans la direction de déplacement de la partie mobile, tandis que la partie mobile est équipée pour la réalisation de chaque découpe d'une lame (18) dont la partie tranchante est biaise, le formage de la feuille étant réalisé après amincissement de la matière et avant la découpe, dans les zones où des découpes doivent être réalisées, caractérisé en ce qu'il consiste à réaliser la lame de telle sorte que son bord tranchant soit situé à proximité de l'aplomb d'un bord de la fente (10) correspondante de la partie fixe, la fente (10) débouchant dans une rainure (9) de largeur supérieure à celle de la fente, ce procédé consistant, en outre, à réaliser, préalablement à la découpe, et à l'aide de la lame de coupe (18), un amincissement de la feuille de matière destinée à former l'article, une contre-pression étant exercée, lors de cet amincissement, sur la face opposée à celle du côté de laquelle se trouve la lame de découpe.

2. Procédé selon la revendication 1, caractérisé en ce qu'il consiste à relier le fond de chaque fente (10) à une source de pression.

3. Procédé selon la revendication 2, caractérisé en ce que la fente (10) débouchant dans le fond de chaque rainure (9) communique avec un collecteur (12) dans lequel débouchent les canaux (13) formant les évents du moule (8).

4. Procédé selon l'une quelconque des revendications 1 à 3, caractérisé en ce que la lame (18) permettant la réalisation de plusieurs découpes (7) séparées les unes des autres par des pattes (6) comprend des évidements (20) au niveau de chaque patte, tandis que la rainure correspondante, ménagée dans le moule, est interrompue au niveau des zones où sont formées les pattes.

## Claims

1. A fabrication process for articles of synthetic material, produced by thermo-forming and connected to one another by attachment lugs (6), that can easily be broken apart and that are separated from one another by cuts obtained without removal of material, inside a mould that consists of a fixed portion (8) and a movable portion (16) that can be displaced relatively to the fixed portion between an open position and a closed position of the mould, this process consisting in the provision, in the fixed portion and at each place where a cut is to be made, of a slot (10) bounded by two sides aligned with the direction of displacement of the movable portion, whilst for the production of each cut the movable portion is equipped with a blade (18) the cutting portion of which is bevelled, the forming of the sheet taking place after the material has been thinned and before it is cut in the areas where cuts are to be made, characterized in that it consists in arranging the blade in such a way that its cutting edge is situated close to the rim of one side of the corresponding slot (10) in the fixed portion, the slot (10) opening out into a groove (9) of width greater than that of the slot, this process also consisting in obtaining before cutting, and with the help of the cutting blade (18), a thinning of the sheet of material intended to form the article, a counter-pressure being produced during this thinning on the face of the sheet opposite to that on the side of which the cutting blade is situated.

2. A process according to Claim 1, characterized in that it consists in connecting the base of each slot (10) to a source of pressure.

3. A process according to Claim 2, characterized in that the slot (10) opening out into the base of each groove (9) communicates with a collector (12) into which open out the channels (13) that form the vents of the mould (8).

4. A process according to any of Claims 1 to 3, characterized in that the blade (18) that enables several cuts (7) separated from one another by lugs (6) to be formed comprises gaps (20) at the position of each lug, whilst the corresponding groove that is provided in the mould is interrupted in the areas where the lugs are formed.

## Patentansprüche

1. Verfahren zum Herstellen von Kunststoffgegenständen erhalten durch Thermoformung und miteinander durch leicht brechbare Verbindungslaschen (6) verbunden, die voneinander durch Einschnitte getrennt sind, die man ohne Materialbeseitigung erhält, im Inneren einer Form, die einen feststehenden Teil (8) und einen beweglichen Teil (16) aufweist, der bezüglich des feststehenden Teiles zwischen einer Offenstellung und einer Schließstellung der Form bewegbar ist, wobei das Verfahren darin besteht, in dem feststehenden Teil und an jeder Stelle, wo ein Einschnitt geschaffen werden muß, einen Schlitz (10) vorzusehen, der durch zwei in die Verlagerungsrichtung des beweglichen Teiles orientierte Ränder begrenzt ist, während der bewegliche Teil für die Bildung eines jeden Einschnittes mit einer Klinge (18) versehen wird, deren schneidender Teil schräg ist, wobei das Formen des Materialbogens durchgeführt wird nach Verdünnung des Materiales und vor dem Einschneiden in den Zonen, in denen die Einschnitte geschaffen werden sollen, dadurch gekennzeichnet, daß die Klinge so ausgebildet wird, daß ihre Schneidkante etwa senkrecht zu einem Rand des entsprechenden Schlitzes (10) des feststehenden Teiles liegt und der Schlitz (10) in eine Nut (9) einer größeren Breite als diejenige des Schlitzes mündet und das Verfahren ferner darin besteht, vor dem Einschnitt und mit Hilfe der Schneidklinge (18) eine Verdünnung des Materialbogens, der den Gegenstand bilden soll, durchzuführen, wobei während dieser Verdünnung ein Gegendruck auf die Fläche ausgeübt wird, die derjenigen gegenüberliegt, auf deren Seite sich die Schneidklinge befindet.

2. Verfahren nach Anspruch 1, dadurch gekennzeichnet, daß der Boden eines jeden Schlitzes (10) mit einer Druckmittelquelle verbunden wird.

3. Verfahren nach Anspruch 2, dadurch gekennzeichnet, daß der in den Boden einer jeden Nut (9) mündende Schlitz mit einem Sammler (12) kommuniziert, in den die Kanäle (13) münden, die die Lüftungen der Form (8) bilden.

4. Verfahren nach einem der Ansprüche 1 bis 3, dadurch gekennzeichnet, daß die die Bildung mehrerer voneinander durch Laschen (6) getrennter Einschnitte (7) ermöglichende Klinge (8) Ausnehmungen (20) an der Stelle jeder Lasche hat, während die entsprechende, in der Form vorgesehene Nut an der Stelle der Zonen, wo die Laschen geformt werden, unterbrochen ist.

FIG_1

FIG.3

FIG_2

FIG.4

FIG.6

FIG.5

FIG.7